# EUROPEAN PATENT APPLICATION

(11) **EP 4 810 273 A1**
(43) Date of publication of application: **23.09.2026**
(21) Application number: 23959130.8
(22) Date of filing: 21.11.2023
(51) Int. Cl.: B60G 3/20, B60G 3/18, B25J 5/00, B65G 35/00, B65G 1/04, B65G 1/10, B65G 1/14, B62D 63/00, F16F 9/06, F16F 5/00, F16F 9/00, F16F 15/00, G06Q 10/08, B60N 2/50, B60P 3/00

(54) **CHASSIS DEVICE, MOVABLE PLATFORM, SHOCK ABSORBER, AND MATERIAL STORAGE AND RETRIEVAL DEVICE**

(71) Applicant: SZ Shanzhi Technology Co., Ltd., Shenzhen, Guangdong 518000 (CN)
(72) Inventor: FU, Hao, Shenzhen, Guangdong 518000 (CN); YU, Xiaobin, Shenzhen, Guangdong 518000 (CN); WANG, Zhen, Shenzhen, Guangdong 518000 (CN); BAO, Yuqi, Shenzhen, Guangdong 518000 (CN)
(74) Representative: Appelt, Christian W.
(86) International application number: PCT/CN2023/133021
(87) International publication number: WO 2025/107155

(57) **Abstract**

A chassis device, a movable platform, a shock absorber, and a material storage and retrieval device are provided. The chassis device (100) includes a frame (10), a link mechanism (20), and a first auxiliary wheel assembly (30). The link mechanism (20) includes a first link (21) and a second link (22). The first link (21) is hinged to the frame (10) through a first hinge point (A1), and the first link (21) is hinged to the first auxiliary wheel assembly (30) through a second hinge point (A2). The second link (22) is hinged to the frame (10) through a third hinge point (A3), and the second link (22) is hinged to the first auxiliary wheel assembly (30) through a fourth hinge point (A4). A connecting line between the first hinge point (A1) and the second hinge point (A2) is parallel or approximately parallel to a connecting line between the third hinge point (A3) and the fourth hinge point (A4), and a connecting line between the first hinge point (A1) and the third hinge point (A3) is parallel or approximately parallel to a connecting line between the second hinge point (A2) and the fourth hinge point (A4).

## Description

### Technical Field

The present application relates to the field of robot technologies, and in particular relates to a chassis device, a movable platform, a shock absorber, and a material storage and retrieval device.

### Background Art

A robot is an intelligent machine capable of semi-autonomous or fully autonomous operation, and has wide applications in industries such as medical care, education, military, subway inspection, and production and daily life. Common robots include legged robots and wheeled robots. Wheeled robots have become mainstream due to advantages such as fast running speed, low noise, high efficiency, strong obstacle-crossing capability, and strong terrain adaptability. The main body of the wheeled robot can be divided into two major parts, namely the body and the chassis device. The body is mainly used for installing electronic components and carrying items. The chassis device is mainly used to achieve traveling and steering through rollers or tires and the like.

In the related art, the wheels of the chassis device of the wheeled robot are distributed at the bottom or on two sides of the chassis bracket. When the wheels encounter an obstacle, they move upward in the vertical direction relative to the chassis bracket. The chassis device in this implementation has large vibration and poor obstacle-crossing capability.

### Summary of the Invention

In view of this, the present application provides a chassis device, a movable platform, a shock absorber, and a material storage and retrieval device.

In a first aspect, the present application provides a chassis device, including: a frame, a link mechanism, and a first auxiliary wheel assembly, where the link mechanism includes:
a first link, one end of the first link being hinged to the frame through a first hinge point, and the other end of the first link being hinged to the first auxiliary wheel assembly through a second hinge point; and
a second link, one end of the second link being hinged to the frame through a third hinge point, and the other end of the second link being hinged to the first auxiliary wheel assembly through a fourth hinge point, where
a connecting line between the first hinge point and the second hinge point is parallel or approximately parallel to a connecting line between the third hinge point and the fourth hinge point, and a connecting line between the first hinge point and the third hinge point is parallel or approximately parallel to a connecting line between the second hinge point and the fourth hinge point.

In a second aspect, the present application provides a chassis device, including: a frame, a lifting mechanism, and a first auxiliary wheel assembly, where the lifting mechanism includes:
a lifting member, connected to the frame, the first auxiliary wheel assembly is mechanically coupled with the lifting member, the first auxiliary wheel assembly is rotatable relative to the lifting member around a first axis, and the lifting member is used such that during movement of the chassis device and when the first auxiliary wheel assembly encounters an obstacle, a horizontal displacement and a vertical displacement of the first auxiliary wheel assembly relative to the frame change simultaneously;
a limiting member, connected to the frame and mechanically coupled with the first auxiliary wheel assembly or the lifting member, the limiting member is used for maintaining an extending direction of the first axis unchanged during movement of the first auxiliary wheel assembly, where
during the movement of the chassis device and when the first auxiliary wheel assembly encounters an obstacle, the first auxiliary wheel assembly is tilted and lifted upward under an action of the lifting member, while maintaining the extending direction of the first axis unchanged.

In a third aspect, the present application provides a movable platform, including:
a material storage and retrieval device; and
the chassis device as described above, where
the material storage and retrieval device is connected to the chassis device.

In a fourth aspect, the present application provides a shock absorber, configured to provide shock absorption between a frame and a first auxiliary wheel assembly connected to the frame through a link mechanism, the shock absorber includes:
a sleeve mechanism;
a movable rod, the movable rod is configured to be movable relative to the sleeve mechanism, one of the sleeve mechanism and the movable rod is connected to the frame, and the other of the sleeve mechanism and the movable rod is connected to the link mechanism or the first auxiliary wheel assembly;
a first elastic element, the first elastic element is used to reset the movable rod relative to the sleeve mechanism after relative movement therebetween; and
a locking mechanism, the locking mechanism has an unlocked state and a locked state;
when the locking mechanism is in the unlocked state, the movable rod is able to move freely relative to the sleeve mechanism; and
when the locking mechanism is in the locked state, the locking mechanism is able to restrict relative movement between the sleeve mechanism and the movable rod.

In a fifth aspect, the present application provides a material storage and retrieval device, including:
a body, provided with a plurality of cargo compartments, each cargo compartment having a window for material entry or exit;
a shielding assembly, for shielding the windows, the shielding assembly being movably connected to the body and configured to open or close the window of a target cargo compartment, the target cargo compartment being a cargo compartment from which material is to be retrieved; and
a pick-and-place device, movably disposed in the body, the pick-and-place device having a first working mode and a second working mode;
in the first working mode, after the window of the target cargo compartment is unshielded, the pick-and-place device is used to automatically transfer the material into or out of the target cargo compartment via its window, the shielding assembly shielding other windows except for the target window;
in the second working mode, the pick-and-place device is configured to shield some of the cargo compartment windows, the shielding assembly is configured to shield other cargo compartment windows, and the window of the target cargo compartment is exposed between the pick-and-place device and the shielding assembly, so that the material in the target cargo compartment can be retrieved.

It can be seen from the above technical solutions that, in the chassis device provided in the first aspect of the present application, the first auxiliary wheel assembly is connected to the frame through the link mechanism. Moreover, the link mechanism is a parallelogram link mechanism or an approximately parallelogram link mechanism. An equivalent link is formed by the connecting line between the first hinge point and the second hinge point, an equivalent link is formed by the connecting line between the third hinge point and the fourth hinge point, an equivalent link is formed by the connecting line between the first hinge point and the third hinge point, and an equivalent link is formed by the connecting line between the second hinge point and the fourth hinge point. Constraint relationships exist among the four links. During operation of the chassis device, when the first auxiliary wheel assembly encounters an obstacle, under the constraint of the link mechanism, the first auxiliary wheel assembly can swing smoothly relative to the frame. That is, the first auxiliary wheel assembly can cross the obstacle smoothly. In this way, the shaking amplitude of the chassis device during the obstacle-crossing process is reduced, and situations in which items carried by the chassis device undergo large displacement or even fall off are avoided. Secondly, compared with the solution in the related art in which the wheel is directly mounted on the frame, the link mechanism enables the first auxiliary wheel assembly to have a larger movement space. In this way, the chassis device can adapt to larger obstacles, and at the same time, when the first auxiliary wheel assembly crosses a large obstacle, the shaking amplitude of the chassis device is greatly reduced. That is, the chassis device has good obstacle-crossing and stability capabilities.

### Brief Description of the Drawings

To more clearly illustrate the technical solutions of some embodiments of the present application, the accompanying drawings required to be used in the description of the embodiments will be briefly introduced below. Obviously, the accompanying drawings in the following description are some embodiments of the present application, and for a person skilled in the art, other accompanying drawings can also be obtained based on these accompanying drawings without creative efforts.
FIG. 1 is a schematic structural diagram of a chassis device provided in some embodiments of the present application;
FIG. 2 is a schematic partial structural diagram of a chassis device provided in some embodiments of the present application;
FIG. 3 is a partially enlarged schematic diagram of position E in FIG. 2;
FIG. 4 is a schematic partial structural diagram of a chassis device provided in some embodiments of the present application;
FIG. 5 is a schematic partial structural diagram of a chassis device provided in some embodiments of the present application;
FIG. 6 is a schematic structural diagram of a chassis device provided in some embodiments of the present application;
FIG. 7 is a schematic structural diagram of a chassis device provided in some embodiments of the present application;
FIG. 8 is a schematic structural diagram of a chassis device provided in some embodiments of the present application;
FIG. 9 is a schematic structural diagram of a chassis device provided in some embodiments of the present application;
FIG. 10 is a schematic structural diagram of a shock absorber provided in some embodiments of the present application;
FIG. 11 is a partially enlarged schematic diagram of position F in FIG. 10;
FIG. 12 is a partially enlarged schematic diagram of position G in FIG. 10;
FIG. 13 is a schematic partial structural diagram of a chassis device provided in some embodiments of the present application;
FIG. 14 is a schematic partial structural diagram of a chassis device provided in some embodiments of the present application;
FIG. 15 is a schematic structural diagram of a movable platform provided in some embodiments of the present application;
FIG. 16 is a schematic structural diagram of a movable platform provided in some embodiments of the present application;
FIG. 17 is a schematic partial structural diagram of a material storage and retrieval device provided in some embodiments of the present application; and
FIG. 18 is a schematic structural diagram of a first curtain body assembly provided in some embodiments of the present application.

### Brief Description

To make the objectives, technical solutions, and advantages of the embodiments of the present application clearer, the technical solutions of the embodiments of the present application will be described clearly and completely in conjunction with the accompanying drawings of the embodiments. Obviously, the described embodiments are part of the embodiments of the present application, rather than all embodiments. All other embodiments obtained by a person skilled in the art based on the embodiments in the present application without creative efforts fall within the scope of protection of the present application.

The features designated by "first" and "second" in the specification and claims of the present application can explicitly or implicitly include one or more of such features. In the description of the present application, unless otherwise stated, "plurality" means two or more. In addition, "and/or" in the specification and claims indicates at least one of the connected objects. The character "/" generally indicates an "or" relationship between the preceding and following objects.

In the description of the present application, it should be understood that the orientation or positional relationships indicated by terms such as "center," "longitudinal," "lateral," "length," "width," "thickness," "upper," "lower," "front," "rear," "left," "right," "vertical," "horizontal," "top," "bottom," "inner," "outer," "clockwise," "counterclockwise," "axial," "radial," and "circumferential" are based on the orientation or positional relationships shown in the drawings. These are provided merely for the convenience of describing the present application and for simplifying the description, and are not intended to indicate or imply that the referenced device or component must have a specific orientation, or be constructed and operated in a specific orientation, and therefore should not be understood as a limitation of the present application.

It should also be noted in the description of the present application that, unless otherwise explicitly specified and limited, the terms "mount," "connected," and "coupled" should be broadly understood. For example, they can refer to fixed connections or detachable connections, or integral connections; they can refer to mechanical connections or electrical connections; they can be directly connected or indirectly connected through an intermediate medium, or refer to communication within two components. A person skilled in the art can understand the specific meanings of the above terms in the present application according to the specific circumstances.

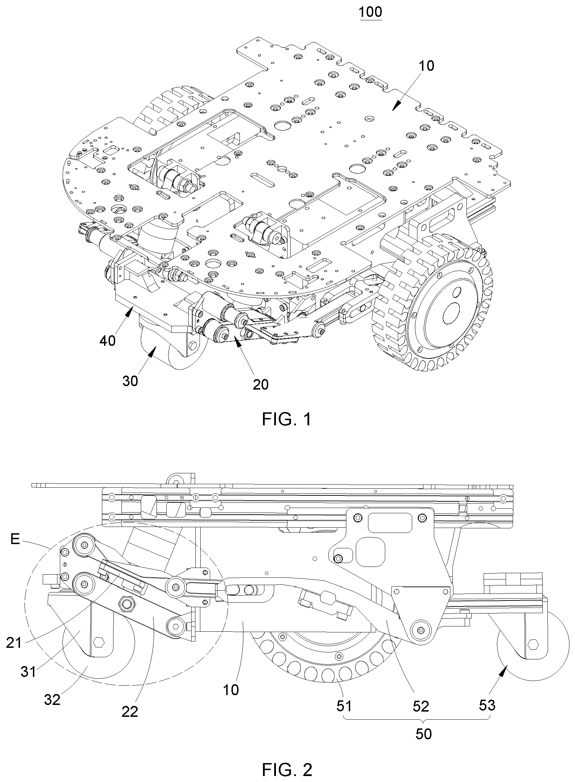

As shown in FIG. 1, some embodiments of the present application provide a chassis device 100. The chassis device 100 can be applied to wheeled robots, including but not limited to material storage robots, cargo handling robots, express delivery robots, building delivery robots, and automatic meal delivery robots.

As shown in FIGS. 1 to 3, the proposed chassis device 100 includes a frame 10, a link mechanism 20, and a first auxiliary wheel assembly 30. The link mechanism 20 includes a first link 21 and a second link 22. One end of the first link 21 is hinged to the frame 10 through a first hinge point A1; the other end of the first link 21 is hinged to the first auxiliary wheel assembly 30 through a second hinge point A2. One end of the second link 22 is hinged to the frame 10 through a third hinge point A3; the other end of the second link 22 is hinged to the first auxiliary wheel assembly 30 through a fourth hinge point A4. A connecting line between the first hinge point A1 and the second hinge point A2 is parallel or approximately parallel to a connecting line between the third hinge point A3 and the fourth hinge point A4. A connecting line between the first hinge point A1 and the third hinge point A3 is parallel or approximately parallel to a connecting line between the second hinge point A2 and the fourth hinge point A4.

The connecting line between the first hinge point A1 and the second hinge point A2 being approximately parallel to the connecting line between the third hinge point A3 and the fourth hinge point A4 means that the first link 21 and the second link 22 are arranged at an angle, and the angle is less than or equal to 10 degrees. Preferably, the angle between the connecting line of the first hinge point A1 and the second hinge point A2 and the connecting line of the third hinge point A3 and the fourth hinge point A4 is between 1 degree and 5 degrees. Similarly, the connecting line between the first hinge point A1 and the third hinge point A3 being approximately parallel to the connecting line between the second hinge point A2 and the fourth hinge point A4 means that the connecting line between the first hinge point A1 and the third hinge point A3 and the connecting line between the second hinge point A2 and the fourth hinge point A4 are arranged at an angle, and the angle is less than or equal to 10 degrees. Preferably, the angle between the connecting line of the first hinge point A1 and the third hinge point A3 and the connecting line of the second hinge point A2 and the fourth hinge point A4 is between 1 degree and 5 degrees.

In this embodiment, the chassis device 100 provides a connection between the first auxiliary wheel assembly 30 and the frame 10 through the link mechanism 20. Moreover, the link mechanism 20 is a parallelogram link mechanism or an approximately parallelogram link mechanism. An equivalent link is formed by the connecting line between the first hinge point A1 and the second hinge point A2, an equivalent link is formed by the connecting line between the third hinge point A3 and the fourth hinge point A4, an equivalent link is formed by the connecting line between the first hinge point A1 and the third hinge point A3, and an equivalent link is formed by the connecting line between the second hinge point A2 and the fourth hinge point A4, with constraint relationships existing among the four links. During the operation of the chassis device 100, when the first auxiliary wheel assembly 30 encounters an obstacle, under the constraint of the link mechanism 20, the first auxiliary wheel assembly 30 can swing smoothly relative to the frame 10. That is, the first auxiliary wheel assembly 30 can cross obstacles smoothly while reducing the shaking amplitude of the chassis device 100 during the obstacle-crossing process. This avoids situations in which items carried by the chassis device 100 undergo large displacements or even fall off. Furthermore, compared with the conventional solution where wheels are directly mounted on the frame, the link mechanism 20 provides the first auxiliary wheel assembly 30 with a larger range of motion, allowing the chassis device 100 to adapt to larger obstacles. At the same time, when the first auxiliary wheel assembly 30 crosses a relatively large obstacle, the link mechanism 20 can greatly reduce the shaking amplitude of the chassis device 100. That is, the chassis device 100 has excellent obstacle-crossing and stability capabilities. The obstacles may include, but are not limited to, curbs, door steps, cable trenches, speed bumps, cement surfaces, and uneven paved surfaces such as stone roads.

In one embodiment, in response to the first auxiliary wheel assembly 30 climbing, the second hinge point A2 is positioned above the first hinge point A1 in the vertical direction. Here, the vertical direction is defined with respect to the orientation of the chassis device 100 in its normal use state. For example, when the chassis device 100 is operating on the ground, the vertical direction is perpendicular to the ground. This definition is applied throughout the following description.

In this embodiment, when the first auxiliary wheel assembly 30 climbs, the second hinge point A2 is above the first hinge point A1 in the vertical direction. That is, when the first auxiliary wheel assembly 30 encounters an obstacle, the first link 21 swings upward relative to the first hinge point A1. Compared with the conventional wheels moving straight upward in the vertical direction, during the upward swing of the first link 21, the angle between the movement direction of the first auxiliary wheel assembly 30 and the direction of the reaction force exerted by the obstacle on the first auxiliary wheel assembly 30 becomes smaller. As a result, the component of the reaction force along the movement direction of the first auxiliary wheel assembly 30 increases, making it easier for the first link 21 to swing upward, and thus making it easier for the first auxiliary wheel assembly 30 to cross the obstacle. It can be understood that, because the first auxiliary wheel assembly 30 in this embodiment swings upward more easily, the chassis device 10 only requires a smaller driving force to cross the same obstacle. That is, compared with conventional chassis devices, the chassis device 10 provided in this embodiment requires less driving force to cross the same obstacle, thereby saving energy.

In another embodiment, when the chassis device 100 is placed on a flat ground, the second hinge point A2 is positioned above the first hinge point A1 in the vertical direction. In this arrangement, the first link 21 extends upward from the first hinge point A1 to the second hinge point A2. When the first auxiliary wheel assembly 30 encounters an obstacle, the first link 21 can more easily swing upward, making it easier for the first auxiliary wheel assembly 30 to cross the obstacle.

In one embodiment, the frame 10 includes a front side and a rear side opposite to the front side. The link mechanism 20 is provided on the front side and/or the rear side of the frame 10. That is, the link mechanism 20 may be provided only on the front side of the frame 10, only on the rear side of the frame 10, or on both the front and rear sides of the frame 10. It should be noted that the front side of the frame 10 refers to the side at the front end of the chassis device 100 when the chassis device 100 is moving forward normally; correspondingly, the rear side of the frame 10 refers to the side at the rear end of the chassis device 100 when moving forward normally. This definition is applied throughout the following description.

In one embodiment, the front side of the frame 10 is provided with link mechanisms 20. The number of link mechanisms 20 is two. The two link mechanisms 20 are spaced apart along the left-right direction of the frame 10. In this arrangement, the constraint effect of the two link mechanisms 20 makes the movement of the first auxiliary wheel assembly 30 relative to the frame 10 more stable.

It should be noted that the number of link mechanisms 20 is not limited to two. For example, in another embodiment, the number of link mechanisms 20 is one, and this link mechanism 20 is arranged at the middle position of the frame 10. In another embodiment, the number of link mechanisms 20 is three, with two link mechanisms 20 spaced apart along the left-right direction of the frame 10, and the third link mechanism 20 arranged at the middle position of the frame 10. Of course, the number of link mechanisms 20 can also be more than three, depending on the actual design requirements.

In another embodiment, the rear side of the frame 10 is provided with link mechanisms 20. The number of link mechanisms 20 is two, and the two link mechanisms 20 are spaced apart along the left-right direction of the frame 10. Similarly, in this embodiment, the number of link mechanisms 20 is not limited to two; it can also be one, three, or more than three, depending on the design requirements.

As shown in FIGS. 1, 2, and 4, in one embodiment, the chassis device 100 further includes a connecting assembly 40. The first auxiliary wheel assembly 30 is connected to the link mechanism 20 through the connecting assembly 40. The first link 21 and the second link 22 are hinged to the connecting assembly 40. The first auxiliary wheel assembly 30 includes a first base 31 and a first auxiliary wheel 32 that can roll relative to the first base 31. The first base 31 is connected to the connecting assembly 40 and can rotate relative to the connecting assembly 40 around a first axis S1. The first axis S1 extends along the vertical direction.

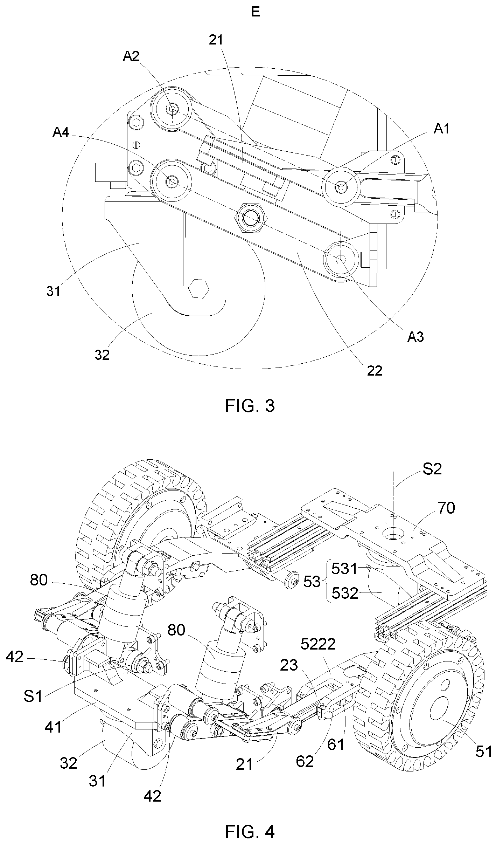

As shown in FIGS. 3 and 4, in one embodiment, the connecting line between the first hinge point A1 and the third hinge point A3 extends in the vertical direction. The connecting line between the second hinge point A2 and the fourth hinge point A4 is parallel to the connecting line between the first hinge point A1 and the third hinge point A3. In this arrangement, according to the principle that opposite sides of a parallelogram remain parallel, when the connecting line between the first hinge point A1 and the third hinge point A3 extends in the vertical direction, the connecting line between the second hinge point A2 and the fourth hinge point A4 also extends in the vertical direction. In this way, the first axis S1 of the first auxiliary wheel assembly 30 can remain vertical, preventing the first auxiliary wheel assembly 30 from tilting and allowing it to operate normally.

As shown in FIG. 4, in one embodiment, the connecting assembly 40 includes a first connecting member 41, and two first structural members 42 connected to the first connecting member 41. Each first structural member 42 is correspondingly connected to the link mechanism 20. The first base 31 is connected to the first connecting member 41 and can rotate relative to the first connecting member 41 around the first axis S1. It should be noted that the number of first structural members 42 is not limited to two; it can also be three or more, as long as the number of first structural members 42 matches the number of link mechanisms 20 and each is correspondingly connected. It should also be noted that, in this embodiment, the number of first auxiliary wheel assemblies 30 can be one or more, depending on the actual design requirements.

It should be noted that the connecting assembly 40 is not limited to the above embodiment. For example, in another embodiment, the number of connecting assemblies 40 is two, and each is correspondingly connected to a link mechanism 20. The number of first auxiliary wheel assemblies 30 is two, each correspondingly connected to a connecting assembly 40. The two first auxiliary wheel assemblies 30 are spaced apart along the left-right direction of the frame 10. It should also be noted that the number of connecting assemblies 40 is not limited to two. In other embodiments, the number of connecting assemblies 40 can be three or more, as long as the connecting assemblies 40, the link mechanisms 20, and the first auxiliary wheel assemblies 30 are connected in a one-to-one correspondence.

As shown in FIGS. 2, 4, and 5, in one embodiment, the chassis device 100 further includes a balance frame structure 50. The balance frame structure 50 includes a driving wheel 51, a third link 52, and a second auxiliary wheel assembly 53. The third link 52 is hinged to the frame 10 through a fifth hinge point A5. The driving wheel 51 and the second auxiliary wheel assembly 53 are arranged on the third link 52 and are located on opposite sides of the fifth hinge point A5. The first auxiliary wheel assembly 30, the driving wheel 51, and the second auxiliary wheel assembly 53 are sequentially arranged along the front-rear direction of the frame 10. One end of the third link 52, which is close to the link mechanism 20, is movably connected to the link mechanism 20 through a fitting structure 60. In this arrangement, the composite mechanism formed by the link mechanism 20 and the balance frame structure 50 can vary according to changes in the magnitude and direction of the forces acting on the first auxiliary wheel assembly 30, the driving wheel 51, and the second auxiliary wheel assembly 53. That is, the chassis device 100 can adapt to terrain undulations by adjusting the relative heights of the wheels, enabling terrain adaptability while keeping all the wheels in contact with the ground.

In one embodiment, the fitting structure 60 includes a first fitting part 61 and a second fitting part 62. The first fitting part 61 is provided on the link mechanism 20, and the second fitting part 62 is provided on the third link 52. The connection between the first fitting part 61 and the second fitting part 62 allows both sliding and rotational fit.

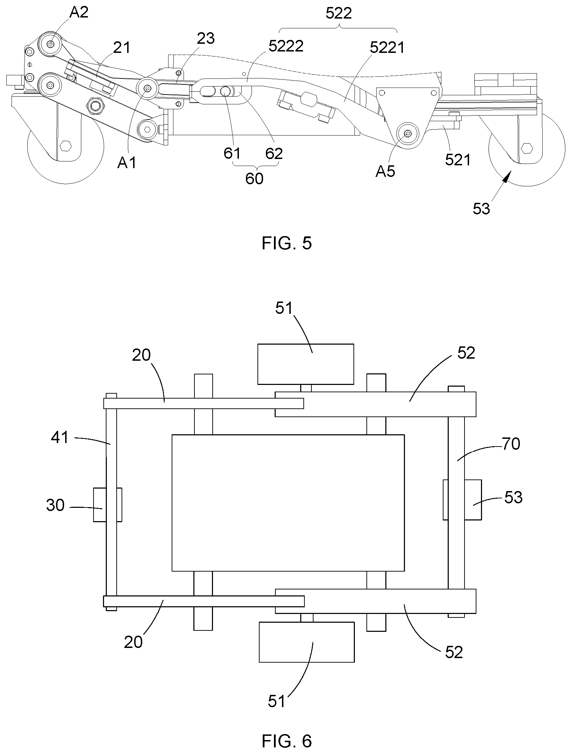

As shown in FIGS. 4 and 5, in one embodiment, the link mechanism 20 further includes a connecting portion 23. The connecting portion 23 is connected to the first link 21 and extends from the first hinge point A1 toward the third link 52. The first fitting part 61 is provided on the connecting portion 23. The third link 52 includes a first extension segment 521 and a second extension segment 522 connected to the first extension segment 521. The fifth hinge point A5 is located at the connection between the first extension segment 521 and the second extension segment 522. The second auxiliary wheel assembly 53 is connected to the first extension segment 521. The driving wheel 51 is connected to the second extension segment 522. The connection point between the driving wheel 51 and the second extension segment 522 divides the second extension segment 522 into a first sub-extension segment 5221 and a second sub-extension segment 5222. The first sub-extension segment 5221 is connected to the first extension segment 521. The second fitting part 62 is provided on the second sub-extension segment 5222.

In this arrangement, the first link 21 and the connecting portion 23 together form a lever. One end of the lever is the second hinge point A2, and the other end of the lever is the contact point between the second extension segment 522 and the second sub-extension segment 5222. During the climbing process of the first auxiliary wheel assembly 30, the lever formed by the first link 21 generates an upward force component on the frame 10 at the first hinge point A1. That is, the first auxiliary wheel assembly 30 exerts a lifting effect on the frame 10 while climbing. Compared with the conventional solution in which the auxiliary wheel directly lifts the frame 10 vertically upward, this embodiment uses the lever principle to lift the frame 10 with a smaller force. That is, under the same lifting force, the first auxiliary wheel assembly 30 in this embodiment can produce a better lifting effect on the frame 10, making it easier for the frame 10 to cross obstacles. As a result, the chassis device 100 gains the capability to overcome higher and more challenging obstacles.

In addition, it should be noted that in this embodiment, by using the lever arrangement, the moment arm from the first auxiliary wheel assembly 30 to the contact point between the second extension segment 522 and the second sub-extension segment 5222 is relatively long, while the moment arm from the first hinge point A1 to that same contact point is relatively short. According to the proportional relationship of the lever principle, the vertical movement distance of the first auxiliary wheel assembly 30 transmitted to the frame 10 is correspondingly reduced based on this ratio. That is, even if the vertical displacement of the first auxiliary wheel assembly 30 is large, the vertical displacement of the frame 10 is relatively smaller according to the proportional relationship. As a result, the chassis device 100 can cross obstacles more effectively while the vertical vibration of the frame 10 remains low, allowing the chassis device 100 to operate smoothly even on uneven surfaces.

Specifically, by applying the above lever principle, the operation of the chassis device 100 when encountering an obstacle is as follows:
During the climbing process of the first auxiliary wheel assembly 30, the lever formed by the first link 21 generates an upward force component on the frame 10 at the first hinge point A1. That is, the first auxiliary wheel assembly 30 exerts a lifting effect on the frame 10 while climbing. According to the lever principle in this embodiment, the first auxiliary wheel assembly 30 can lift the frame 10 with a relatively small force, thereby enabling the chassis device 100 to overcome higher and more challenging obstacles.

When the first auxiliary wheel assembly 30 has completed its climbing, during the climbing process of the driving wheel 51, the third link 52 forms a lever. One end of the lever is the connection point between the driving wheel 51 and the third link 52, and the other end of the lever is the position where the third link connects to the second auxiliary wheel assembly 53. The lever formed by the third link 52 generates an upward force component on the frame 10 at the fifth hinge point A5. That is, the driving wheel 51 exerts a lifting effect on the frame 10 during its climbing. Compared with the conventional solution in which the driving wheel 51 lifts the frame 10 directly upward, this embodiment uses the lever principle to lift the frame 10 with a smaller force, thereby enabling the chassis device 100 to overcome higher and more challenging obstacles.

During the continued forward movement of the chassis device 100, when the second auxiliary wheel assembly 53 climbs, the third link 52 again forms a lever. One end of the lever is the position where the third link connects to the second auxiliary wheel assembly 53, and the other end is the connection point between the driving wheel 51 and the third link 52. The lever formed by the third link 52 generates an upward force component on the frame 10 at the fifth hinge point A5. That is, the driving wheel 51 exerts a lifting effect on the frame 10 during the climbing of the second auxiliary wheel assembly 53. Compared with the conventional solution of directly lifting the frame 10 with the driving wheel 51, this embodiment applies the lever principle to lift the frame 10 with a smaller force, enabling the chassis device 100 to overcome higher and more difficult obstacles. When the chassis device 100 crosses obstacles while moving backward, the same lever effect is also present.

That is, with the structure provided in this embodiment, whether it is the first auxiliary wheel assembly 30 or the driving wheel 51 during their climbing, or the second auxiliary wheel assembly 53 during its climbing, the lever principle can be used to generate an upward force component on the frame 10 to lift the frame 10. In this way, the chassis device 100 can lift the frame 10 with a relatively small force, enabling it to overcome higher and more challenging obstacles. At the same time, the chassis device 100 completes the lifting of the frame 10 in three stages, so that the vibration generated on the frame 10 during each lifting action is reduced, making the chassis device 100 cross obstacles more smoothly.

As shown in FIGS. 4 and 5, in one embodiment, the first fitting part 61 includes a protruding column 611, and the second fitting part 62 includes a long slot 621. The protruding column 611 is provided on the connecting portion 23, and the long slot 621 is provided on the second sub-extension segment 5222. The protruding column 611 can movably pass through the long slot 621. Herein, "movably passing through the long slot 621" means that the protruding column 611 can move along the extension direction of the long slot 621 and can also rotate relative to the long slot 621. It should be noted that the positions of the protruding column 611 and the long slot 621 can be interchanged; that is, the protruding column 611 can be provided on the second sub-extension segment 5222 and the long slot 621 on the connecting portion 23.

As shown in FIG. 4, in one embodiment, the second auxiliary wheel assembly 53 is adjustably arranged along the front-rear direction of the frame 10 on the third link 52. In this arrangement, by adjusting the position of the second auxiliary wheel assembly 53, the distance between the first auxiliary wheel assembly 30 and the second auxiliary wheel assembly 53 can be increased, thereby increasing the wheelbase to improve stability. In addition, when the chassis device 100 is not in use, the second auxiliary wheel assembly 53 can be retracted to reduce the space it occupies.

As shown in FIG. 4, in one embodiment, the chassis device 100 further includes a second connecting member 70. The number of third links 52 is two, and the two third links 52 are spaced apart along the left-right direction of the frame 10. The second connecting member 70 is located on the rear side of the frame 10, positioned between the two third links 52, and is slidably connected to the two third links 52 along the front-rear direction of the frame 10. The second auxiliary wheel assembly 53 is rotatably connected to the second connecting member 70. In this arrangement, the two third links 52 provide stable support to the second connecting member 70, allowing the movement of the second auxiliary wheel assembly 53 to be smoother. It should be noted that in this embodiment, the number of second auxiliary wheel assemblies 53 can be one or more, depending on the actual design requirements.

As shown in FIG. 4, in one embodiment, the second auxiliary wheel assembly 53 includes a second base 531 and a second auxiliary wheel 532 rotatable relative to the second base 531. The second base 531 is connected to the second connecting member 70 and can rotate relative to the second connecting member 70 around a second axis S2. The second axis S2 is arranged along the vertical direction.

In one embodiment, there are two second connecting members 70, each correspondingly connected to a third link 52. The second auxiliary wheel assemblies 53 correspond one-to-one with the second connecting members 70 and are rotatably connected to the second connecting members 70. The two second auxiliary wheel assemblies 53 are spaced apart along the left-right direction of the frame 10.

In one embodiment, the driving wheel 51 serves as a powered wheel, while the first auxiliary wheel 32 and the second auxiliary wheel 532 are non-powered wheels. Of course, in other embodiments, the first auxiliary wheel 32 and the second auxiliary wheel 532 can also be configured as powered wheels.

As shown in FIG. 6, in a specific embodiment, the number of link mechanisms 20, third links 52, and driving wheels 51 is two each. The number of first connecting members 41, first auxiliary wheel assemblies 30, second connecting members 70, and second auxiliary wheel assemblies 53 is one each. The two driving wheels 51 are arranged on the left and right sides of the frame 10, respectively. The first connecting member 41 is connected between the two link mechanisms 20. The first auxiliary wheel assembly 30 is connected to the first connecting member 41. The second connecting member 70 is connected between the two third links 52. The second auxiliary wheel assembly 53 is connected to the second connecting member 70.

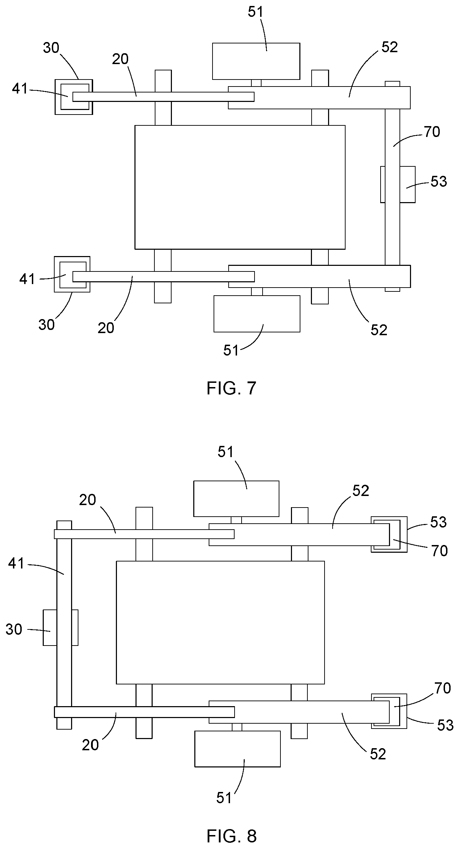

As shown in FIG. 7, in another specific embodiment, the numbers of link mechanisms 20, third links 52, driving wheels 51, first connecting members 41, and first auxiliary wheel assemblies 30 are all two. The numbers of the second connecting member 70 and the second auxiliary wheel assembly 53 are each one. The two driving wheels 51 are arranged on the left and right sides of the frame 10, respectively. The two first connecting members 41 are correspondingly connected one-to-one with the two link mechanisms 20. The two first auxiliary wheel assemblies 30 are correspondingly connected one-to-one with the two first connecting members 41. The second connecting member 70 is connected between the two third links 52, and the second auxiliary wheel assembly 53 is connected to the second connecting member 70.

As shown in FIG. 8, in another specific embodiment, the numbers of link mechanisms 20, third links 52, driving wheels 51, second connecting members 70, and second auxiliary wheel assemblies 53 are all two. The numbers of the first connecting member 41 and the first auxiliary wheel assembly 30 are each one. The two driving wheels 51 are arranged on the left and right sides of the frame 10, respectively. The first connecting member 41 is connected between the two link mechanisms 20, and the first auxiliary wheel assembly 30 is connected to the first connecting member 41. The two second connecting members 70 are correspondingly connected one-to-one with the two third links 52. The two second auxiliary wheel assemblies 53 are correspondingly connected one-to-one with the two second connecting members 70.

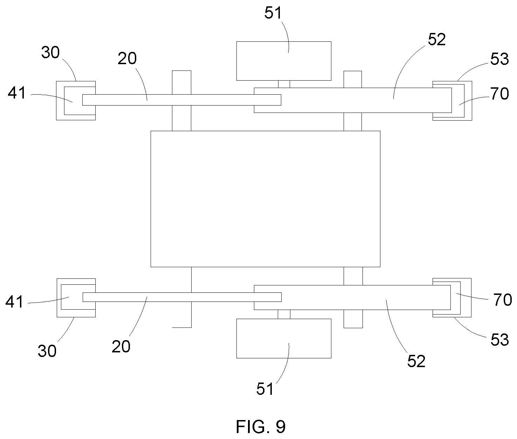

As shown in FIG. 9, in another specific embodiment, the numbers of link mechanisms 20, third links 52, driving wheels 51, first connecting members 41, first auxiliary wheel assemblies 30, second connecting members 70, and second auxiliary wheel assemblies 53 are all two. The two driving wheels 51 are arranged on the left and right sides of the frame 10, respectively. The two first connecting members 41 are correspondingly connected one-to-one with the two link mechanisms 20. The two first auxiliary wheel assemblies 30 are correspondingly connected one-to-one with the two first connecting members 41. The two second connecting members 70 are correspondingly connected one-to-one with the two third links 52. The two second auxiliary wheel assemblies 53 are correspondingly connected one-to-one with the two second connecting members 70.

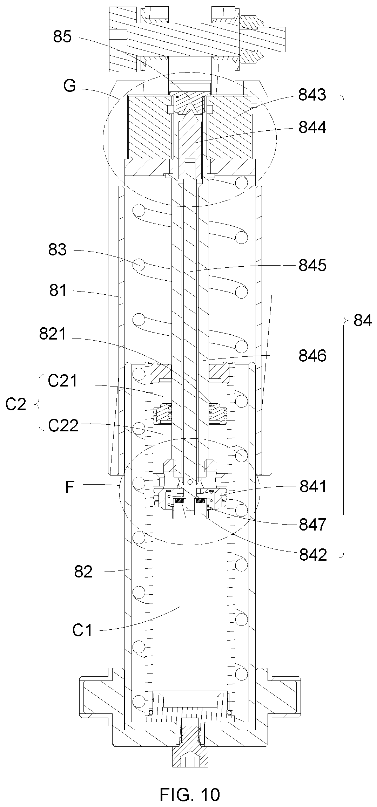

As shown in FIGS. 4 and 10, in one embodiment, the chassis device 100 further includes a shock absorber 80. The shock absorber 80 includes a sleeve mechanism 81, a movable rod 82, a first elastic element 83, and a locking mechanism 84. The movable rod 82 is configured to move relative to the sleeve mechanism 81. The sleeve mechanism 81 is connected to the frame 10, and the movable rod 82 is connected to the link mechanism 20. The first elastic element 83 is configured to reset the movable rod 82 relative to the sleeve mechanism 81 after movement. The locking mechanism 84 has an unlocked state and a locked state. When the locking mechanism 84 is in the unlocked state, the movable rod 82 can move freely relative to the sleeve mechanism 81. When the locking mechanism 84 is in the locked state, it can restrict the relative movement between the sleeve mechanism 81 and the movable rod 82.

It should be noted that the movable rod 82 is not limited to being connected to the link mechanism 20. For example, in another embodiment, the movable rod 82 is configured to be connected to the first auxiliary wheel assembly 30. For instance, the movable rod 82 can be connected to the first auxiliary wheel assembly 30 via the connecting member 40. It should also be noted that the sleeve mechanism 81 and the movable rod 82 can be interchanged. That is, the sleeve mechanism 81 can be connected to the link mechanism 20 or the first auxiliary wheel assembly 30, while the movable rod 82 is connected to the frame 10, depending on the actual design requirements.

In this embodiment, the chassis device 100 is provided with the shock absorber 80 between the frame 10 and the first auxiliary wheel assembly 30. When the chassis device 100 operates on uneven ground, the shock absorber 80 can absorb vibrations caused by surface irregularities, allowing the chassis device 100 to run smoothly. Furthermore, by providing the shock absorber 80 with a locking mechanism 84, it can prevent the chassis device 100 from pitching forward or nodding during sudden braking or descending slopes. The locking mechanism 84 can lock the sleeve mechanism 81 and the movable rod 82 in place. Understandably, when the chassis device 100 is applied to a logistics robot, if pitching or forward tilting occurs during sudden braking or descending, it may cause the cargo to slide significantly, which is unfavorable for the safe transport of goods.

In one embodiment, there are two link mechanisms 20. The two link mechanisms 20 are located at the front side of the frame 10 and are spaced apart along the left-right direction of the frame 10. The shock absorber 80 is located at the front side of the frame 10 and positioned between the two link mechanisms 20. Optionally, the number of shock absorbers 80 can be two, arranged spaced apart along the left-right direction of the frame 10. Of course, the number of shock absorbers 80 is not limited to two; it can also be one or more than two, depending on actual design requirements.

In one embodiment, the shock absorber 80 extends upward and inclined from the link mechanism 20 or the first auxiliary wheel assembly 30 toward the rear side of the frame 10. Of course, it is not limited to this configuration. For example, in other embodiments, the shock absorber 80 may extend vertically or horizontally along the front-rear direction of the frame 10, depending on actual design requirements.

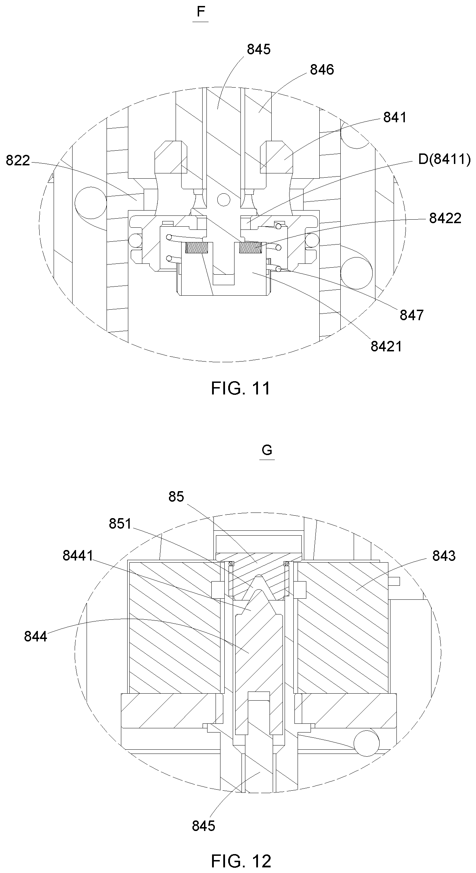

As shown in FIG. 10 and FIG. 11, in one embodiment, the locking mechanism 84 includes a piston 841 and a valve core 842. The piston 841 is disposed inside the movable rod 82 and is configured to divide the interior of the movable rod 82 into a first chamber C1 and a second chamber C2 arranged along the movement direction of the movable rod 82. The first chamber C1 is positioned closer to the first auxiliary wheel assembly 30 or the link mechanism 20. The first chamber C1 is filled with an incompressible liquid. The piston 841 is provided with a passage D that allows communication between the first chamber C1 and the second chamber C2. The piston 841 is connected to the sleeve mechanism 81 and moves synchronously with the sleeve mechanism 81. The valve core 842 is movably arranged inside the movable rod 82 and is configured to block or open the passage D. When the passage D is open, the liquid can flow between the first chamber C1 and the second chamber C2, allowing the piston 841 to move relative to the movable rod 82, thereby permitting relative movement between the sleeve mechanism 81 and the movable rod 82. When the passage D is closed, the liquid cannot flow between the first chamber C1 and the second chamber C2, and the liquid in the first chamber C1 cannot be compressed. As a result, the movement of the piston 841 within the movable rod 82 is restricted, thereby limiting the relative movement between the sleeve mechanism 81 and the movable rod 82.

As shown in FIG. 10 and FIG. 12, in one embodiment, the locking mechanism 84 further includes a coil 843 and an iron core 844. The iron core 844 works in cooperation with the coil 843 so that the iron core 844 can move relative to the coil 843. One of the coil 843 or the iron core 844 is connected to the valve core 842 to drive the valve core 842 to block or open the passage D. Specifically, when the coil 843 is energized, relative movement occurs between the coil 843 and the iron core 844, thereby driving the valve core 842 to block or open the passage D. In this embodiment, driving the valve core 842 to block or open the passage D via the cooperation of the coil 843 and the iron core 844 can effectively reduce costs. Of course, the driving of the valve core 842 is not limited to using the coil 843 and iron core 844; for example, in other embodiments, the valve core 842 can be driven by a cylinder, hydraulic cylinder, electric push rod, or a motor combined with a transmission mechanism.

As shown in FIG. 10, in one embodiment, the locking mechanism 84 further includes a drive rod 845. One of the coil 843 or the iron core 844 is connected to the valve core 842 via the drive rod 845. The coil 843 and the iron core 844 are used to drive the drive rod 845 to block or open the passage D.

As shown in FIG. 10 and FIG. 12, in one embodiment, the shock-absorbing device 80 further includes a positioning member 85. The iron core 844 is located between the positioning member 85 and the drive rod 845. The iron core 844 includes a first end and a second end opposite to the first end. The first end of the iron core 844 is connected to the drive rod 845. The second end of the iron core 844 is provided with a conical protrusion 8441. The side of the positioning member 85 facing the iron core 844 is provided with a conical recess 851. The conical protrusion 8441 and the conical recess 851 cooperate to position the iron core 844, thereby positioning the drive rod 845. This arrangement can prevent misalignment of the drive rod 845 from causing misalignment of the valve core 842, which could otherwise result in poor sealing performance of the valve core 842.

It should be noted that the positions of the conical protrusion 8441 and the conical recess 851 can be interchanged. That is, the second end of the iron core 844 may be provided with the conical recess 851, and the side of the positioning member 85 facing the iron core 844 may be provided with the conical protrusion 8441. This can also be implemented, depending on the specific design requirements.

As shown in FIG. 10, in one embodiment, the inner side of the movable rod 82 is further provided with a floating member 821. The floating member 821 is disposed in the second chamber C2. The floating member 821 is configured to divide the second chamber C2 into an air chamber C21, which communicates with the outside, and a liquid chamber C22, which communicates with the first chamber C1. Both the liquid chamber C22 and the first chamber C1 are filled with incompressible liquid. The locking mechanism 84 further includes a push rod 846. One end of the push rod 846 is fixed relative to the sleeve mechanism 81, and the other end is connected to the piston 841. The push rod 846 is configured to drive the piston 841 to move within the inner cavity of the movable rod 82. At least a portion of the push rod 846 is located outside the movable rod 82. As the push rod drives the piston 841 to move in the direction of the first chamber C1, the volume of the portion of the push rod entering the inner cavity of the movable rod 82 increases, causing liquid to flow from the first chamber C1 into the second chamber C2, thereby driving the floating member 821 to move and increase the volume of the liquid chamber C22. In this embodiment, the floating member 821 not only serves to adjust the volumes of the air chamber C21 and the liquid chamber C22 but also prevents liquid from leaking out of the interior of the movable rod 82.

Of course, the above embodiment is not limiting. For example, in another embodiment, the inner side of the movable rod 82 may be without the floating member 821, and the second chamber C2 is in communication with the outside.

As shown in FIG. 11, in one embodiment, the inner wall of the movable rod 82 is provided with a protrusion 822. The piston 841 is located on the side of the protrusion 822 opposite to the floating member 821. The protrusion 822 is configured to limit the stroke of the piston 841.

As shown in FIGS. 10 and 11, in one embodiment, the push rod 846 is a hollow rod, and the driving rod 845 is movably disposed through the interior of the push rod 846. In this embodiment, the structure of the shock-absorbing device 80 is more compact.

As shown in FIG. 11, in one embodiment, the piston 841 is provided with a through hole 8411 along the moving direction. The driving rod 845 passes through the through hole 8411 and is connected to the valve core 842. The inner diameter of the through hole 8411 is greater than the outer diameter of the driving rod 845, so that the piston 841 is spaced from the driving rod 845, thereby forming the above-mentioned passage D that communicates the first chamber C1 and the second chamber C2.

As shown in FIG. 11, in one embodiment, the valve core 842 includes a valve body 8421 and a sealing member 8422. The driving rod 845 is connected to the valve body 8421. The valve body 8421 is provided with a slot on the side facing the piston 841, and the sealing member 8422 is embedded in the slot. When the driving rod 845 drives the valve body 8421 to move toward the piston 841, the sealing member 8422 can move toward the piston 841 to seal the passage D of the piston 841.

As shown in FIGS. 10 and 11, in one embodiment, the locking mechanism 84 further includes a second elastic member 847. The second elastic member 847 is sleeved on the push rod 846. One end of the second elastic member 847 abuts against the piston 841, and the other end abuts against the valve core 842. The second elastic member 847 is configured to provide a driving force for moving the valve core 842 away from the piston 841.

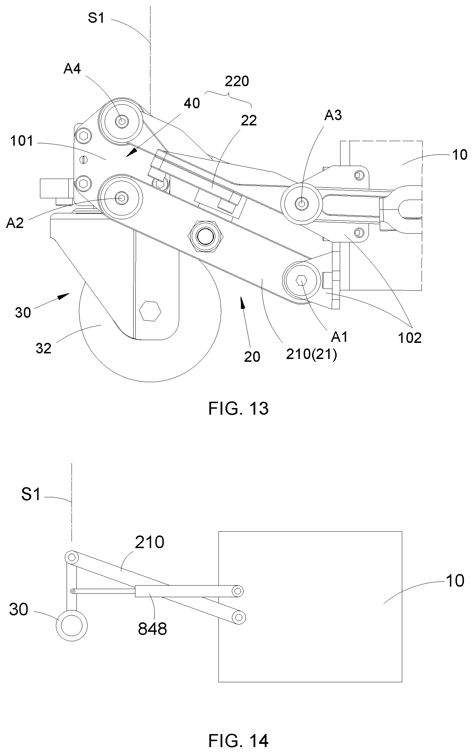

with reference to FIG. 13, some embodiments of the present application further provide a chassis device 100. The proposed chassis device 100 includes a frame 10, a lifting mechanism 200, and a first auxiliary wheel assembly 30. The lifting mechanism 200 includes a lifting member 210 and a limiting member 220. The lifting member 210 is connected to the frame 10. The first auxiliary wheel assembly 30 is mechanically coupled to the lifting member 210, and the first auxiliary wheel assembly 30 is rotatable relative to the lifting member 210 about a first axis S1. The lifting member 210 is configured such that, during the movement of the chassis device 100, when the first auxiliary wheel assembly 30 encounters an obstacle, both the horizontal displacement and the vertical displacement of the first auxiliary wheel assembly 30 relative to the frame 10 can change simultaneously. The limiting member 220 is connected to the frame 10 and is mechanically coupled to the first auxiliary wheel assembly 30 or the lifting member 210. The limiting member 220 is configured to maintain the extension direction of the first axis S1 of the first auxiliary wheel assembly 30 unchanged during its movement. Specifically, during the movement of the chassis device 100, when the first auxiliary wheel assembly 30 encounters an obstacle, the first auxiliary wheel assembly 30 is tilted upward and lifted under the action of the lifting member 210, while maintaining the extension direction of the first axis S1 unchanged.

In this embodiment, the chassis device 100 proposed herein, by providing the limiting member 220, maintains the orientation of the first axis S1 unchanged during the movement of the first auxiliary wheel assembly 30 driven by the lifting member 210. In this way, the first auxiliary wheel assembly 30 can maintain normal operation.

With reference to FIG. 13, in one embodiment, the lifting member 210 includes a first link 21. One end of the first link 21 is hinged to the frame 10 through a first hinge point A1, and the other end is hinged to the first auxiliary wheel assembly 30 through a second hinge point A2. The first link 21 is capable of driving the first auxiliary wheel assembly 30 to rotate, such that both the horizontal displacement and vertical displacement of the first auxiliary wheel assembly 30 relative to the frame 10 change simultaneously.

With reference to FIG. 13, in one embodiment, the limiting member 220 includes a connecting assembly 40 and a second link 22. The first auxiliary wheel assembly 30 is connected to the lifting member 210 through the connecting assembly 40. The connecting assembly 40 is provided with a first connecting portion 101. The frame 10 is provided with a second connecting portion 102. One end of the first link 21 is hinged to the second connecting portion 102 through a first hinge point A1, and the other end is hinged to the first connecting portion 101 through a second hinge point A2. One end of the second link 22 is hinged to the second connecting portion 102 through a third hinge point A3, and the other end is hinged to the first connecting portion 101 through a fourth hinge point A4. The connecting line between the first hinge point A1 and the second hinge point A2 is parallel or approximately parallel to the connecting line between the third hinge point A3 and the fourth hinge point A4. The connecting line between the first hinge point A1 and the third hinge point A3 is parallel or approximately parallel to the connecting line between the second hinge point A2 and the fourth hinge point A4.

It should be noted that, in this embodiment, the first connecting portion 101 may be the first structural member 42, or may be any other structure on the connecting assembly 40.

It should be noted that the limiting member 220 is not limited to the above-described configuration. For example, in another embodiment, as shown in FIG. 14, the limiting member 220 includes an electric push rod 848. One end of the electric push rod 848 is hinged to the frame 10, and the other end is hinged to the first auxiliary wheel assembly 30. When the lifting member 210 drives the first auxiliary wheel assembly 30 to lift or descend, the electric push rod 848 extends or retracts to maintain the orientation of the first axis S1 of the first auxiliary wheel assembly 30 unchanged. Of course, the limiting member 220 is not limited to using the electric push rod 848. For example, in another embodiment, the limiting member 220 may use a motor combined with a ball screw pair, or a motor combined with a gear and rack pair, and so on.

In one embodiment, the first axis S1 extends along the vertical direction, so that the first auxiliary wheel assembly 30 is a wheel group capable of rotating around the vertical direction.

Other components of the chassis device 100 proposed in this embodiment, including their structures, connecting relationships, and beneficial effects, can refer to all the preceding embodiments and will not be repeated herein.

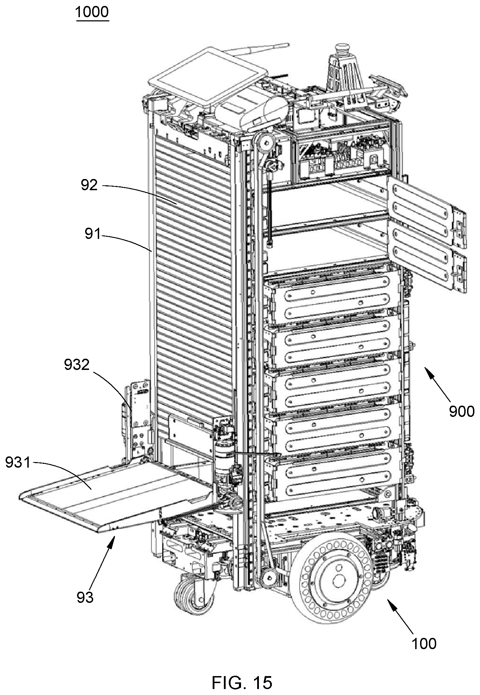

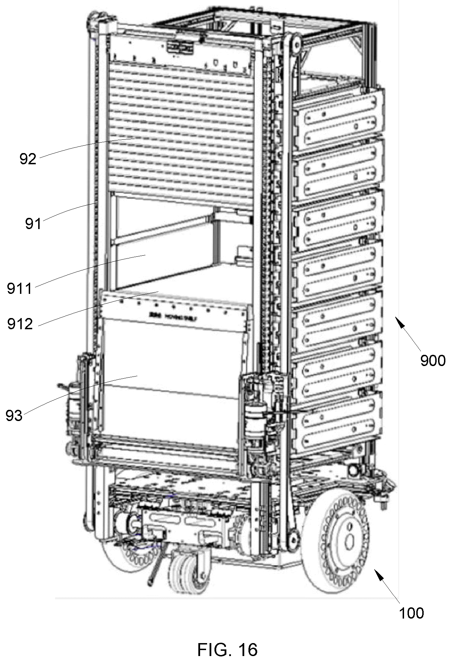

With reference to FIGS. 15 and 16, some embodiments of the present application further provide a movable platform 1000. The proposed movable platform 1000 includes a material storage and retrieval device 900 and the above-described chassis device 100. The material storage and retrieval device 900 is connected to the chassis device 100. The proposed movable platform 1000 can be, but is not limited to, a logistics robot or a handling robot.

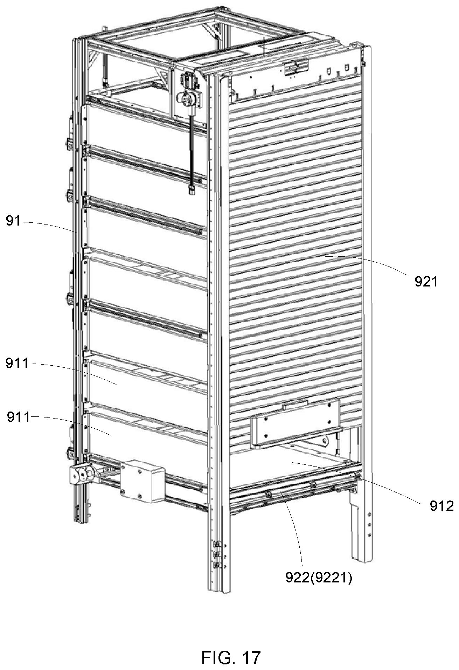

With reference to FIGS. 15 to 17, in one embodiment, the material storage and retrieval device 900 includes a body 91, a shielding assembly 92, and a pick-and-place device 93. The body 91 is provided with a plurality of cargo compartments 911. Each cargo compartment 911 has a window 912 for allowing material to enter or exit. The shielding assembly 92 is configured to block the window 912. The shielding assembly 92 is movably connected to the body 91 and is configured to open or close the window 912 of a target cargo compartment. The target cargo compartment 911 refers to the cargo compartment 911 from which material is to be picked. The pick-and-place device 93 is movably disposed on the body 91 and has a first working mode and a second working mode. As shown in FIGS. 15 and 17, in the first working mode, the pick-and-place device 93 is configured to automatically transfer material in and out via the window 912 of the target cargo compartment after the shielding of the target window 912 is removed. At this time, the shielding assembly 92 blocks other windows 912 except for the target window 912. As shown in FIG. 16, in the second working mode, the pick-and-place device 93 is configured to shield the windows 912 of several cargo compartments 911, while the shielding assembly 92 is configured to shield the windows 912 of other several cargo compartments 911. Furthermore, the window 912 of the target cargo compartment is exposed between the pick-and-place device 93 and the shielding assembly 92 to allow material in the target cargo compartment to be retrieved.

The material storage and retrieval device 900 proposed in this embodiment can be applied to material access at a fixed location, or it can be used to move between different target locations to achieve material transportation and delivery. By configuring the pick-and-place device 93 in the first working mode, the shielding assembly 92 can block other windows 912 except for the target window 912. In the second working mode, the pick-and-place device 93 and the shielding assembly 92 together can block other windows 912 except for the target window 912. That is, during the process of retrieving material from the target cargo compartment, all other windows 912 remain blocked. This effectively protects the internal privacy of other cargo compartments, reduces the risk of material loss in other cargo compartments, and enables the material storage and retrieval device 900 to automatically pick up, transport, and unload materials in an open environment. Furthermore, by providing multiple cargo compartments to store multiple materials, the material storage and retrieval device 900's material storage and transport capacity is enhanced. Each cargo compartment is provided with a receiving space. The sizes of the receiving spaces in different cargo compartments can be the same or different, so as to accommodate different materials in different cargo compartments.

In one embodiment, during the material transfer process, the shielding assembly 92 removes the blockage of the window 912 of the target cargo compartment; after the material transfer is completed, the shielding assembly 92 blocks the window 912 of the target cargo compartment.

Exemplarily, in a building delivery scenario, autonomous delivery of goods can be achieved through the material storage and retrieval device 900 without the involvement of service personnel. If a user is unable to receive the goods in time, the material storage and retrieval device 900 can move to a user-designated delivery location. Then, the shielding assembly 92 removes the blockage of the window 912 of the target cargo compartment; the pick-and-place device 93 transfers the goods out of the target cargo compartment; the shielding assembly 92 again blocks the window 912 of the target cargo compartment; and finally, the pick-and-place device 93 places the goods on the ground or receiving surface corresponding to the delivery location (such as a tabletop or a shelf layer), thereby achieving automatic delivery of the goods in a simple and efficient process.

For example, in a courier delivery scenario, the user does not need to wait for the courier to arrive; they only need to place the package on the floor at the room door or on a predetermined receiving surface (such as a tabletop or a shelf layer). The material storage and retrieval device 900 moves to the location of the package to be picked up. The pick-and-place device 93 retrieves the package from the floor or predetermined receiving surface, the shielding assembly 92 removes the blockage of the window 912 of the target cargo compartment, and the pick-and-place device 93 transfers the package into the target cargo compartment. The shielding assembly 92 then blocks the window 912 of the target cargo compartment again, completing the package collection operation and enabling convenient user parcel sending. Through the material storage and retrieval device 900 of the present application, autonomous package collection can be achieved while effectively protecting the user's privacy. It should be noted that, in embodiments of the present application, the user may also place materials directly into the pick-and-place device 93, which then automatically transfers the materials into a cargo compartment; or the pick-and-place device 93 can transfer materials out of a cargo compartment, and the user retrieves the materials from the pick-and-place device 93. The method by which the pick-and-place device 93 transfers materials can be via a conveyor belt, mechanical gripping, suction cups, or other suitable methods.

With reference to FIG. 15, in one embodiment, the pick-and-place device 93 includes a supporting mechanism 931 and a lifting mechanism 932. The lifting mechanism 932 is configured to drive the supporting mechanism 931 to move to the window 912 of any cargo compartment 911. The supporting mechanism 931 is rotatable relative to the body 91 to switch between a deployed state and a stowed state. In the first working mode, the supporting mechanism 931 is in the deployed state, configured to support materials and transfer materials. In the second working mode, the supporting mechanism 931 is in the stowed state, configured to cooperate with the shielding assembly 92 to block windows 912 other than the window 912 of the target cargo compartment.

When material transfer is required, the supporting mechanism 931 can support the materials to be transferred. For example, materials can be automatically picked up from the floor or a receiving surface by the supporting mechanism 931, or the user can directly place the materials onto the supporting mechanism 931. The supporting mechanism 931 may then transfer the materials into the target cargo compartment, or transfers materials out from the target cargo compartment. Specifically, the materials can be transferred to the floor or a receiving surface, or remain on the supporting mechanism 931, waiting for the user to retrieve them. In embodiments of the present application, when the supporting mechanism 931 moves to the corresponding target position, the shielding assembly 92 correspondingly removes the blockage of the window 912 of the target cargo compartment. Therefore, the shielding assembly 92 is linked with the pick-and-place device 93. When the supporting mechanism 931 is at the target position corresponding to the target cargo compartment, the shielding assembly 92 removes the blockage of the window 912 of the target cargo compartment; after the pick-and-place device 93 transfers the materials, the shielding assembly 92 automatically blocks the window 912 of the target cargo compartment again. This ensures smooth material transfer while also protecting the cargo compartment.

It should be noted that the supporting mechanism 931 is movably connected to the body 91. The supporting mechanism 931 has a certain load-bearing capacity, allowing it to carry materials along the body 91 to reach the target position corresponding to the target cargo compartment.

With reference to FIGS. 15 and 17, in one embodiment, the shielding assembly 92 includes a first curtain assembly 921 and a second curtain assembly 922. The first curtain assembly 921 and the second curtain assembly 922 are arranged along the movement direction of the supporting mechanism 931. In the first working mode, an opening/closing end is formed between the first curtain assembly 921 and the second curtain assembly 922. The opening/closing end is configured to open to expose the window 912 of the target cargo compartment, or close to block the window 912 of the target cargo compartment. The shielding assembly 92 is configured to move relative to the body 91 and is used to adjust the position of the opening/closing end relative to the body 91. In response to the movement of the supporting mechanism 931 to the corresponding target position, the opening/closing end moves together to the vicinity of the target position, removing the blockage of the window 912 of the target cargo compartment. The supporting mechanism 931 is configured to transfer materials into and out of the target cargo compartment.

With reference to FIGS. 16 and 17, in one embodiment, the shielding assembly 92 includes a first curtain assembly 921 and a second curtain assembly 922. The first curtain assembly 921 and the second curtain assembly 922 are arranged along the movement direction of the supporting mechanism 931. In the second working mode, an opening/closing end is formed between the first curtain assembly 921 and the pick-and-place device 93. The opening/closing end is configured to open to expose the window 912 of the target cargo compartment, or close to block the window 912 of the target cargo compartment. The first curtain assembly 921 blocks the windows 912 of some cargo compartments 911 other than the target cargo compartment; the pick-and-place device 93 individually blocks the remaining windows 912 other than the target cargo compartment; or the pick-and-place device 93, together with the second curtain assembly 922 connected to the pick-and-place device 93, closes the remaining windows 912 other than the target cargo compartment.

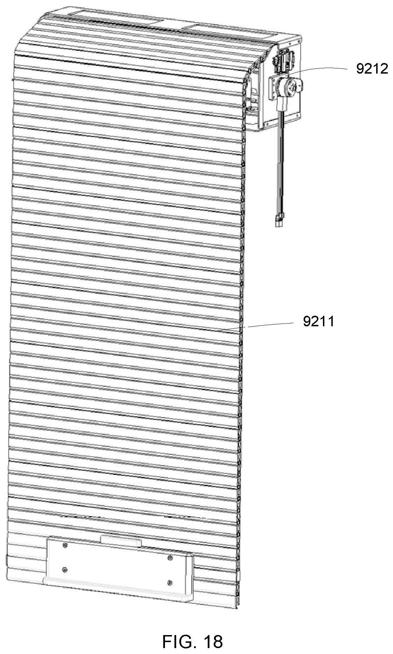

With reference to FIG. 18, in one embodiment, the first curtain assembly 921 may include a first curtain 9211 and a curtain driving mechanism 9212. The curtain driving mechanism 9212 is installed on the body 91. The first curtain 9211 is connected to the curtain driving mechanism 9212 and can move relative to the body 91. The curtain driving mechanism 9212 can drive the first curtain 9211 to move relative to the body 91. In this way, during the material transfer process, by moving the first curtain 9211, the relative position between the first curtain 9211 and the cargo compartments can be adjusted, so that the first curtain 9211 can block the windows 912 of the cargo compartments or remove the blockage of the corresponding windows 912.

Optionally, the first curtain 9211 may be a roll-type structure, a fabric structure, or a louver structure. In embodiments of the present application, the first curtain 9211 may be configured as any one of a roll-type structure, a fabric structure, or a louver structure. This facilitates rolling and unrolling of the first curtain 9211, simplifies its installation layout on the body 91, and provides a simple structure with relatively low manufacturing cost.

With reference to FIG. 17, in one embodiment, the second curtain assembly 922 includes a second curtain 9221. One end of the second curtain 9221 is connected to the body 91, and the other end is connected to the supporting mechanism 931. The supporting mechanism 931 can drive the second curtain 9221 to move. That is, the second end of the second curtain 9221 moves together with the supporting mechanism 931 relative to the body 91. In this way, during the movement of the supporting mechanism 931, the second curtain 9221 can block part of the windows 912 of the cargo compartments, achieving a linked operation between the pick-and-place device 93 and the shielding assembly 92. In this embodiment, the second curtain 9221 can move up and down relative to the body 91 together with the supporting mechanism 931. This structural design is reasonable and clever, reducing both manufacturing cost and control complexity.

Optionally, the second curtain 9221 may be a roll-type structure, a fabric structure, or a louver structure. In embodiments of the present application, the second curtain 9221 may be configured as any one of a roll-type structure, a fabric structure, or a louver structure. This facilitates the rolling and unrolling of the first curtain 9211, while also simplifying the installation layout of the second curtain 9221 on the body 91, providing a simple structure with low manufacturing cost.

In one embodiment, the material storage device further includes a partition(s). The partition(s) may be arranged within the cargo compartment 911 to divide the cargo compartment 911 into at least two chambers arranged left and right. The pick-and-place device 93 and the shielding assembly 92 are each correspondingly used with the chambers. Exemplarily, the partition divides the cargo compartment 911 into two chambers arranged left and right. The number of shielding assemblies 92 and pick-and-place devices 93 is two. Two shielding assemblies 92 are arranged on the left and right; two pick-and-place devices 93 are arranged on the left and right. When it is necessary to retrieve materials from the right-side chamber, the left-side shielding assembly 92 and pick-and-place device 93 remain stationary. In the first working mode, the right-side pick-and-place device 93 removes the blockage of the right-side target window; the shielding assembly 92 blocks other windows 912 except for the target window 912; and the materials in the right-side chamber are automatically transferred to the pick-and-place device 93. In the second working mode, the right-side pick-and-place device 93 is configured to block the windows 912 of several right-side cargo compartments 911; the right-side shielding assembly 92 blocks the windows 912 of other several right-side cargo compartments 911; and the window 912 of the target cargo compartment is exposed between the pick-and-place device 93 and the shielding assembly 92 to allow the materials in the target cargo compartment to be retrieved. In this embodiment, the number of chambers can be multiplied, allowing storage of a larger quantity and more varieties of materials, thereby improving the material storage and transport capacity of the material storage and retrieval device 900.

Other components of the movable platform 1000 proposed in this embodiment, including their structures, connecting relationships, and beneficial effects, can refer to all the preceding embodiments and will not be repeated herein.

With reference to FIGS. 10 to 12, some embodiments of the present application further provide a shock absorber 80, configured to provide shock absorption between the frame 10 and the first auxiliary wheel assembly 30. The first auxiliary wheel assembly 30 is connected to the frame 10 through a link mechanism 20. The shock absorber 80 includes a sleeve mechanism 81, a movable rod 82, a first elastic element 83, and a locking mechanism 84. The movable rod 82 is configured to be movable relative to the sleeve mechanism 81. One of the sleeve mechanism 81 and the movable rod 82 is connected to the frame 10; the other is connected to the link mechanism 20 or the first auxiliary wheel assembly 30. The first elastic element 83 is configured to reset the relative movement between the movable rod 82 and the sleeve mechanism 81. The locking mechanism 84 has an unlocked state and a locked state. When the locking mechanism 84 is in the unlocked state, the movable rod 82 can move freely relative to the sleeve mechanism 81. When the locking mechanism 84 is in the locked state, it can restrict the relative movement between the sleeve mechanism 81 and the movable rod 82.

In one embodiment, the locking mechanism 84 includes a piston 841 and a valve core 842. The piston 841 is disposed inside the movable rod 82 and is configured to divide the interior of the movable rod 82 into a first chamber C1 and a second chamber C2 arranged along the movement direction of the movable rod 82. The first chamber C1 is disposed closer to the first auxiliary wheel assembly 30 or the link mechanism 20, and the first chamber C1 is filled with an incompressible liquid. The piston 841 is provided with a passage D that allows communication between the first chamber C1 and the second chamber C2. The piston 841 is connected to the sleeve mechanism 81 and moves synchronously with the sleeve mechanism 81. The valve core 842 is movably disposed in the interior of the movable rod 82 and is configured to block or open the passage D. When the passage D is open, liquid can flow between the first chamber C1 and the second chamber C2, allowing the piston 841 to move relative to the movable rod 82, thereby enabling relative movement between the sleeve mechanism 81 and the movable rod 82. When the passage D is closed, liquid cannot flow between the first chamber C1 and the second chamber C2, and the liquid in the first chamber C1 is incompressible, which restricts the movement of the piston 841 within the movable rod 82, thereby limiting the relative movement between the sleeve mechanism 81 and the movable rod 82.

In one embodiment, the locking mechanism 84 further includes a coil 843 and an iron core 844. The iron core 844 is used in cooperation with the coil 843, allowing the iron core 844 to move relative to the coil 843. One of the coil 843 and the iron core 844 is connected to the valve core 842 and is configured to drive the valve core 842 to block or open the passage D.

In one embodiment, the locking mechanism 84 further includes a drive rod 845. One of the coil 843 and the iron core 844 is connected to the valve core 842 via the drive rod 845. The coil 843 and the iron core 844 are used to drive the drive rod 845 to block or open the passage D.

In one embodiment, the interior of the movable rod 82 is further provided with a floating member 821. The floating member 821 is disposed in the second chamber C2 and is configured to divide the second chamber C2 into an air chamber C21, which communicates with the outside, and a liquid chamber C22, which communicates with the first chamber C1. Both the liquid chamber C22 and the first chamber C1 are filled with an incompressible liquid. The locking mechanism 84 further includes a push rod 846. One end of the push rod 846 is fixed relative to the sleeve mechanism 81, and the other end is connected to the piston 841. The push rod 846 is configured to drive the piston 841 to move within the interior of the movable rod 82. At least a portion of the push rod 846 is located outside the movable rod 82. As the push rod drives the piston 841 to move toward the first chamber C1, the volume of the push rod entering the interior of the movable rod 82 can increase. At the same time, liquid flows from the first chamber C1 into the second chamber C2 to drive the floating member 821 to move so that the volume of the liquid chamber C22 may increase.

In one embodiment, the locking mechanism 84 further includes a second elastic element 847. The second elastic element 847 is sleeved over the push rod 846. One end of the second elastic element 847 abuts the piston 841, and the other end abuts the valve core 842, providing a driving force that moves the valve core 842 away from the piston 841.

Other components of the shock absorber 80 proposed in this embodiment, including their structures, connecting relationships, and beneficial effects, can refer to the above embodiments and will not be repeated herein.

As shown in FIGS. 15 to 17, some embodiments of the present application further provide a material storage and retrieval device 900. The material storage and retrieval device 900 includes a body 91, a shielding assembly 92, and a pick-and-place device 93. The body 91 is provided with multiple cargo compartments 911. Each cargo compartment 911 has a window 912 for material entry or exit. The shielding assembly 92 is configured to block the window 912. The shielding assembly 92 is movably connected to the body 91 and is configured to open or close the window 912 of a target cargo compartment. The target cargo compartment refers to the cargo compartment 911 from which materials are to be retrieved. The pick-and-place device 93 is movably arranged on the body 91 and has a first working mode and a second working mode. In the first working mode, the pick-and-place device 93 is configured to automatically transfer materials into and out of the target cargo compartment through its window 912 after the shielding of the window 912 has been removed. At this time, the shielding assembly 92 blocks all windows 912 other than the target window 912. In the second working mode, the pick-and-place device 93 blocks the windows 912 of several cargo compartments 911; the shielding assembly 92 blocks the windows 912 of other several cargo compartments 911; and the window 912 of the target cargo compartment is exposed between the pick-and-place device 93 and the shielding assembly 92 to allow materials in the target cargo compartment to be retrieved.

In one embodiment, the pick-and-place device 93 includes a supporting mechanism 931 and a lifting mechanism 932. The lifting mechanism 932 is configured to drive the supporting mechanism 931 to move to the window 912 of any cargo compartment 911. The supporting mechanism 931 is rotatable relative to the body 91 to switch between a deployed state and a stowed state. In the first working mode, the supporting mechanism 931 is in the deployed state, configured to support materials and transfer materials. In the second working mode, the supporting mechanism 931 is in the stowed state, configured to cooperate with the shielding assembly 92 to block windows 912 other than the window 912 of the target cargo compartment.

In one embodiment, the shielding assembly 92 includes a first curtain assembly 9211 and a second curtain assembly 9221. The first curtain assembly 9211 and the second curtain assembly 9221 are arranged along the movement direction of the supporting mechanism 931. In the first working mode, an opening/closing end is formed between the first curtain assembly 9211 and the second curtain assembly 9221. The opening/closing end is configured to open to expose the window 912 of the target cargo compartment, or close to block the window 912 of the target cargo compartment. The shielding assembly 92 is configured to move relative to the body 91 to adjust the position of the opening/closing end relative to the body 91. In response to the movement of the supporting mechanism 931 to the corresponding target position, the opening/closing end moves together to the vicinity of the target position, removing the blockage of the window 912 of the target cargo compartment. The supporting mechanism 931 is configured to transfer materials into and out of the target cargo compartment.

In one embodiment, the shielding assembly 92 includes a first curtain assembly 9211 and a second curtain assembly 9221. The first curtain assembly 9211 and the second curtain assembly 9221 are arranged along the movement direction of the supporting mechanism 931. In the second working mode, an opening/closing end is formed between the first curtain assembly 9211 and the pick-and-place device 93. The opening/closing end is configured to open to expose the window 912 of the target cargo compartment, or close to block the window 912 of the target cargo compartment. The first curtain assembly 9211 blocks part of the windows 912 of the cargo compartments 911 other than the target cargo compartment; the pick-and-place device 93 individually blocks the remaining windows 912 other than the target cargo compartment; or the pick-and-place device 93, together with the second curtain assembly 9221 connected to the pick-and-place device 93, closes the remaining windows 912 other than the target cargo compartment.

Other components of the material storage and retrieval device 900 proposed in this embodiment, including their structures, connecting relationships, and beneficial effects, can refer to all the preceding embodiments and will not be repeated herein.

The device embodiments described above are merely exemplary. The units described as separate components may or may not be physically separate. The components shown as units may or may not be physical units; that is, they may be located in a single place or distributed across multiple network units. Depending on actual needs, some or all of the modules may be selected to achieve the objectives of the embodiments of the present application. A person skilled in the art can understand and implement these embodiments without requiring inventive effort.

As used herein, "an embodiment," "embodiments," or "one or more embodiments" means that the particular features, structures, or characteristics described in connection with the embodiments are included in at least one embodiment of the present application. In addition, it should be noted that the term "in one embodiment" does not necessarily refer to the same embodiment in every instance.

The specification provided herein describes numerous specific details. However, it will be understood that the embodiments of the present application can be practiced without these specific details. In some instances, well-known methods, structures, and techniques have not been shown in detail so as not to obscure the understanding of this specification.

In the claims, no reference numeral appearing in parentheses should be construed as limiting the claims. The word "comprising" does not exclude the presence of elements or steps not listed in the claims. The words "one" or "a" preceding an element do not exclude the presence of multiple such elements. The present application can be implemented using hardware including several different elements as well as appropriately programmed computers. In apparatus claims listing multiple units, some of these units may be implemented through the same hardware item. The use of the terms "first," "second," "third," etc., does not indicate any order and can be interpreted as mere labels or names.

Finally, it should be noted that the above embodiments are provided only to illustrate the technical solutions of the present application and not to limit them. Although the present application has been described in detail with reference to the foregoing embodiments, a person skilled in the art should understand that modifications can still be made to the technical solutions described in the foregoing embodiments, or certain technical features can be equivalently replaced; such modifications or replacements do not depart from the spirit and scope of the technical solutions of the embodiments of the present application.

## Claims

1. A chassis device, **characterized in that** the chassis device comprises a frame, a link mechanism, and a first auxiliary wheel assembly, wherein the link mechanism comprises:
a first link, one end of the first link being hinged to the frame through a first hinge point, and the other end of the first link being hinged to the first auxiliary wheel assembly through a second hinge point; and
a second link, one end of the second link being hinged to the frame through a third hinge point, and the other end of the second link being hinged to the first auxiliary wheel assembly through a fourth hinge point, wherein
a connecting line between the first hinge point and the second hinge point is parallel or approximately parallel to a connecting line between the third hinge point and the fourth hinge point, and a connecting line between the first hinge point and the third hinge point is parallel or approximately parallel to a connecting line between the second hinge point and the fourth hinge point.

2. The chassis device according to claim 1, **characterized in that** in response to climbing of the first auxiliary wheel assembly, the second hinge point is positioned above the first hinge point in a vertical direction.

3. The chassis device according to claim 1 or 2, **characterized in that** the chassis device further comprises a connecting assembly, wherein the first auxiliary wheel assembly is connected to the link mechanism through the connecting assembly, and the first link and the second link are hinged to the connecting assembly; the first auxiliary wheel assembly comprises a first base and a first auxiliary wheel rotatable relative to the first base, the first base being connected to the connecting assembly and rotatable relative to the connecting assembly about a first axis, the first axis extending in a vertical direction.

4. The chassis device according to claim 3, **characterized in that** the connecting line between the first hinge point and the third hinge point extends in a vertical direction, and the connecting line between the second hinge point and the fourth hinge point is parallel to the connecting line between the first hinge point and the third hinge point.

5. The chassis device according to claim 3, **characterized in that** the frame comprises a front side and a rear side opposite to the front side, and the link mechanism is arranged on the front side and/or the rear side of the frame.

6. The chassis device according to claim 5, **characterized in that** the front side of the frame is provided with the link mechanism, the number of the link mechanism is at least two, and the at least two link mechanisms are arranged at intervals along a left-right direction of the frame; and/or,
the rear side of the frame is provided with the link mechanism, the number of the link mechanism is at least two, and the at least two link mechanisms are arranged at intervals along the left-right direction of the frame.

7. The chassis device according to claim 6, **characterized in that** the connecting assembly comprises a first connecting member and at least two first structural members connected to the first connecting member, the first structural members are in one-to-one corresponding connection with the link mechanisms, the first base is connected to the first connecting member and is rotatable relative to the first connecting member about the first axis.

8. The chassis device according to claim 6, **characterized in that** the number of the connecting assemblies is at least two and is in one-to-one corresponding connection with the link mechanisms, the number of the at least two first auxiliary wheel assemblies is at least two and is in one-to-one corresponding connection with the connecting assemblies, and the at least two first auxiliary wheel assemblies are arranged at intervals along the left-right direction of the frame.

9. The chassis device according to claim 6, **characterized in that** the chassis device further comprises a balance frame structure, the balance frame structure comprises a driving wheel, a third link, and a second auxiliary wheel assembly;
the third link is hinged to the frame through a fifth hinge point, the driving wheel and the second auxiliary wheel assembly are disposed on the third link and located on two sides of the fifth hinge point, and the first auxiliary wheel assembly, the driving wheel, and the second auxiliary wheel assembly are sequentially arranged along a front-rear direction of the frame, wherein
one end of the third link close to the link mechanism is movably connected to the link mechanism through a fitting structure.

10. The chassis device according to claim 9, **characterized in that** the fitting structure comprises a first fitting part and a second fitting part, wherein the first fitting part is disposed on the link mechanism, the second fitting part is disposed on the third link, and the first fitting part and the second fitting part are in sliding fit and rotational fit.

11. The chassis device according to claim 10, **characterized in that** the link mechanism further comprises a connecting portion, the connecting portion is connected to the first link and extends from the first hinge point toward the third link, and the first fitting part is disposed on the connecting portion;
the third link comprises a first extension segment and a second extension segment connected to the first extension segment, the fifth hinge point is located at a connection between the first extension segment and the second extension segment, the second auxiliary wheel assembly is connected to the first extension segment, the driving wheel is connected to the second extension segment, a connection point between the driving wheel and the second extension segment divides the second extension segment into a first sub-extension segment and a second sub-extension segment, the first sub-extension segment is connected to the first extension segment, and the second fitting part is disposed on the second sub-extension segment.

12. The chassis device according to claim 9, **characterized in that** the chassis device further comprises a connecting assembly and a second connecting member, the connecting assembly comprise a first connecting member;
the number of the link mechanisms, the third links, and the driving wheels is two;
the number of the first connecting member, the first auxiliary wheel assembly, the second connecting member, and the second auxiliary wheel assembly is one;
the two third links are respectively disposed on left and right sides of the frame, the two driving wheels are respectively disposed on the left and right sides of the frame, the two link mechanisms are arranged at intervals along the left-right direction of the frame, the first connecting member is connected between the two link mechanisms, the first auxiliary wheel assembly is connected to the first connecting member, the second connecting member is located on a rear side of the frame, the second connecting member is connected between the two third links, and the second auxiliary wheel assembly is connected to the second connecting member.

13. The chassis device according to claim 9, **characterized in that** the chassis device further comprises a connecting assembly and a second connecting member, the connecting assembly comprise first connecting members;
the number of the link mechanisms, the third links, the driving wheels, the first connecting members, and the first auxiliary wheel assemblies is two;
the number of the second connecting member and the second auxiliary wheel assembly is one;
the two third links are respectively disposed on left and right sides of the frame, the two driving wheels are respectively disposed on the left and right sides of the frame, the two link mechanisms are arranged at intervals along the left-right direction of the frame, the two first connecting members are in one-to-one corresponding connection with the two link mechanisms, the two first auxiliary wheel assemblies are in one-to-one corresponding connection with the two first connecting members, the second connecting member is located on a rear side of the frame, the second connecting member is connected between the two third links, and the second auxiliary wheel assembly is connected to the second connecting member.

14. The chassis device according to claim 9, **characterized in that** the chassis device further comprises a connecting assembly and second connecting members, the connecting assembly comprise a first connecting member;
the number of the link mechanisms, the third links, the driving wheels, the second connecting members, and the second auxiliary wheel assemblies is two;
the number of the first connecting member and the first auxiliary wheel assembly is one;
the two third links are respectively disposed on left and right sides of the frame, the two driving wheels are respectively disposed on the left and right sides of the frame, the two link mechanisms are arranged at intervals along the left-right direction of the frame, the first connecting member is connected between the two link mechanisms, the first auxiliary wheel assembly is connected to the first connecting member, the two second connecting members are located on a rear side of the frame and are in one-to-one corresponding connection with the two third links, and the two second auxiliary wheel assemblies are in one-to-one corresponding connection with the two second connecting members.

15. The chassis device according to claim 9, **characterized in that** the chassis device further comprises a connecting assembly and second connecting members, the connecting assembly comprise first connecting members;
the number of the link mechanisms, the third links, the driving wheels, the first connecting members, the first auxiliary wheel assemblies, the second connecting members, and the second auxiliary wheel assemblies is two;
the two third links are respectively disposed on left and right sides of the frame, the two driving wheels are respectively disposed on the left and right sides of the frame, the two link mechanisms are arranged at intervals along the left-right direction of the frame, the two first connecting members are in one-to-one corresponding connection with the two link mechanisms, the two first auxiliary wheel assemblies are in one-to-one corresponding connection with the two first connecting members, the two second connecting members are located on a rear side of the frame and are in one-to-one corresponding connection with the two third links, and the two second auxiliary wheel assemblies are in one-to-one corresponding connection with the two second connecting members.

16. The chassis device according to claim 1, **characterized in that** the chassis device further comprises a shock absorber, the shock absorber comprises:
a sleeve mechanism;
a movable rod, the movable rod being configured to be movable relative to the sleeve mechanism, one of the sleeve mechanism and the movable rod being connected to the frame, and the other of the sleeve mechanism and the movable rod being connected to the link mechanism or the first auxiliary wheel assembly;
a first elastic element, the first elastic element being configured to reset the relative movement between the movable rod and the sleeve mechanism; and
a locking mechanism, the locking mechanism having an unlocked state and a locked state;
when the locking mechanism is in the unlocked state, the movable rod is able to move freely relative to the sleeve mechanism;
when the locking mechanism is in the locked state, the locking mechanism is able to restrict relative movement between the sleeve mechanism and the movable rod.

17. The chassis device according to claim 16, **characterized in that** the locking mechanism comprises:
a piston, disposed within the movable rod, configured to divide an inner cavity of the movable rod into a first chamber and a second chamber arranged along a movement direction of the movable rod, the first chamber being disposed close to the first auxiliary wheel assembly or the link mechanism, the first chamber being filled with an incompressible liquid; the piston being provided with a passage configured to allow communication between the first chamber and the second chamber; the piston being connected to the sleeve mechanism and moving synchronously with the sleeve mechanism;
a valve core, the valve core being movably disposed within the inner cavity of the movable rod, configured to block or open the passage;
when the passage is in an open state, the liquid is able to flow between the first chamber and the second chamber, allowing the piston to move relative to the movable rod, thereby enabling relative movement between the sleeve mechanism and the movable rod;
when the passage is in a closed state, the liquid cannot flow between the first chamber and the second chamber, and the liquid in the first chamber is incompressible, restricting movement of the piston within the movable rod, thereby limiting relative movement between the sleeve mechanism and the movable rod.

18. The chassis device according to claim 17, **characterized in that** the locking mechanism further comprises:
a coil and an iron core, the iron core being used in cooperation with the coil so that the iron core is movable relative to the coil, one of the coil and the iron core being connected to the valve core, configured to drive the valve core to block or open the passage.

19. The chassis device according to claim 18, **characterized in that** the locking mechanism further comprises:
a drive rod, one of the coil and the iron core being connected to the valve core through the drive rod, the coil and the iron core being configured to drive the drive rod to block or open the passage.

20. The chassis device according to claim 17, **characterized in that** an inner side of the movable rod is further provided with a floating member, the floating member being disposed in the second chamber to divide the second chamber into an air chamber in communication with the outside and a liquid chamber in communication with the first chamber, the liquid chamber and the first chamber being filled with the incompressible liquid;
the locking mechanism further comprises a push rod, one end of the push rod being fixed relative to the sleeve mechanism, the other end thereof being connected to the piston, configured to drive the piston to move within the inner cavity of the movable rod, at least a portion of the push rod being located outside the movable rod;
as the push rod drives the piston to move toward the first chamber, the volume of the push rod entering the inner cavity of the movable rod increases, and the liquid flows from the first chamber into the second chamber, thereby driving the floating member to move so that the liquid chamber expands.

21. The chassis device according to claim 20, **characterized in that** the locking mechanism further comprises a second elastic element, the second elastic element being sleeved on the push rod, one end of the second elastic element abutting the piston, the other end thereof abutting the valve core, configured to provide a driving force for the valve core away from the piston.

22. A chassis device, **characterized in that** the chassis device comprises a frame, a lifting mechanism, and a first auxiliary wheel assembly, wherein the lifting mechanism comprises:
a lifting member, connected to the frame, the first auxiliary wheel assembly is mechanically coupled with the lifting member, the first auxiliary wheel assembly is rotatable relative to the lifting member around a first axis, and the lifting member is used such that during movement of the chassis device and when the first auxiliary wheel assembly encounters an obstacle, a horizontal displacement and a vertical displacement of the first auxiliary wheel assembly relative to the frame change simultaneously;
a limiting member, connected to the frame and mechanically coupled with the first auxiliary wheel assembly or the lifting member, the limiting member is used for maintaining an extending direction of the first axis unchanged during movement of the first auxiliary wheel assembly, wherein
during the movement of the chassis device and when the first auxiliary wheel assembly encounters an obstacle, the first auxiliary wheel assembly is tilted and lifted upward under an action of the lifting member, while maintaining the extending direction of the first axis unchanged.

23. The chassis device according to claim 22, **characterized in that** the lifting member comprises a first link, one end of the first link is hinged with the frame through a first hinge point, the other end of the first link is hinged with the first auxiliary wheel assembly through a second hinge point, and the first link enables the horizontal displacement and the vertical displacement of the first auxiliary wheel assembly relative to the frame to change simultaneously.

24. The chassis device according to claim 22, **characterized in that** the limiting member comprises a connecting assembly and a second link, the first auxiliary wheel assembly is connected to the lifting member through the connecting assembly, the connecting assembly is provided with a first connecting portion, and the frame is provided with a second connecting portion;
one end of the first link is hinged with the second connecting portion through a first hinge point, and the other end of the first link is hinged with the first connecting portion through a second hinge point; and
one end of the second link is hinged with the second connecting portion through a third hinge point, and the other end of the second link is hinged with the first connecting portion through a fourth hinge point, wherein
a connecting line between the first hinge point and the second hinge point is parallel or approximately parallel to a connecting line between the third hinge point and the fourth hinge point, and a connecting line between the first hinge point and the third hinge point is parallel or approximately parallel to a connecting line between the second hinge point and the fourth hinge point.

25. The chassis device according to claim 22, **characterized in that** the first axis extends along a vertical direction.

26. A movable platform, **characterized in that** the movable platform comprises:
a material storage and retrieval device; and
the chassis device according to any one of claims 1 to 25, wherein
the material storage and retrieval device is connected to the chassis device.

27. The movable platform according to claim 26, **characterized in that** the material storage and retrieval device comprises:
a body, provided with a plurality of cargo compartments, the cargo compartments having windows for materials to enter or exit;
a shielding assembly, used for shielding the windows, the shielding assembly is movably connected to the body and is configured to open or close the window of a target cargo compartment, the target cargo compartment is a cargo compartment from which goods are to be taken; and
a pick-and-place device, movably disposed on the body, the pick-and-place device has a first working mode and a second working mode;
in the first working mode, after shielding of the window of the target cargo compartment is released, the pick-and-place device is used for automatically transferring a material in or out via the window of the target cargo compartment, and the shielding assembly shields windows other than the target window;
in the second working mode, the pick-and-place device is used for shielding the windows of several of the cargo compartments, the shielding assembly is used for shielding the windows of other cargo compartments, and the window of the target cargo compartment is exposed between the pick-and-place device and the shielding assembly, so that a material of the target cargo compartment can be taken out.

28. The movable platform according to claim 27, **characterized in that** the pick-and-place device comprises a supporting mechanism and a lifting mechanism for driving the supporting mechanism to move to the window of any cargo compartment, and the supporting mechanism is rotatable relative to the body so as to switch between a deployed state and a stowed state;
in the first working mode, the supporting mechanism is in the deployed state, and is used for supporting the material and for transferring the material;
in the second working mode, the supporting mechanism is in the stowed state, and is used for cooperating with the shielding assembly to close windows other than the window of the target cargo compartment.

29. The movable platform according to claim 28, **characterized in that** the shielding assembly comprises: a first curtain assembly and a second curtain assembly, the first curtain assembly and the second curtain assembly are arranged along a moving direction of the supporting mechanism;
in the first working mode, an opening and closing end is formed between the first curtain assembly and the second curtain assembly for opening to expose the window of the target cargo compartment or closing to shield the window of the target cargo compartment, and the shielding assembly is configured to be movable relative to the body so as to adjust a position of the opening and closing end relative to the body; in response to the supporting mechanism moving to a corresponding target position, the opening and closing end moves to a vicinity of the target position, the opening and closing end releases shielding of the window of the target cargo compartment, and the supporting mechanism is used for transferring the material in or out of the target cargo compartment.

30. The movable platform according to claim 28, **characterized in that** the shielding assembly comprises: a first curtain assembly and a second curtain assembly, the first curtain assembly and the second curtain assembly are arranged along a moving direction of the supporting mechanism;
in the second working mode, an opening and closing end is formed between the first curtain assembly and the pick-and-place device for opening to expose the window of the target cargo compartment or closing to shield the window of the target cargo compartment, the first curtain assembly shields some of the windows of the cargo compartments other than the window of the target cargo compartment, and the pick-and-place device alone shields remaining windows other than the window of the target cargo compartment, or the pick-and-place device and the second curtain assembly connected to the pick-and-place device cooperatively close the remaining windows other than the window of the target cargo compartment.

31. A shock absorber, configured to provide shock absorption between a frame and a first auxiliary wheel assembly connected to the frame through a link mechanism, **characterized in that** the shock absorber comprises:
a sleeve mechanism;
a movable rod, the movable rod is configured to be movable relative to the sleeve mechanism, one of the sleeve mechanism and the movable rod is connected to the frame, and the other of the sleeve mechanism and the movable rod is connected to the link mechanism or the first auxiliary wheel assembly;
a first elastic element, the first elastic element is used to reset the movable rod relative to the sleeve mechanism after relative movement therebetween; and
a locking mechanism, the locking mechanism has an unlocked state and a locked state;
when the locking mechanism is in the unlocked state, the movable rod is able to move freely relative to the sleeve mechanism; and
when the locking mechanism is in the locked state, the locking mechanism is able to restrict relative movement between the sleeve mechanism and the movable rod.

32. The shock absorber according to claim 31, **characterized in that** the locking mechanism comprises:
a piston, disposed in the movable rod, for dividing an inner cavity of the movable rod into a first chamber and a second chamber arranged along a moving direction of the movable rod, the first chamber being disposed close to the first auxiliary wheel assembly or the link mechanism, the first chamber being filled with an incompressible liquid; a passage is formed in the piston to allow communication between the first chamber and the second chamber; the piston is connected to the sleeve mechanism and moves synchronously with the sleeve mechanism;
a valve core, movably disposed in the inner cavity of the movable rod, for blocking the passage or opening the passage;
when the passage is in an open state, the liquid can flow between the first chamber and the second chamber, allowing the piston to move relative to the movable rod, thereby enabling relative movement between the sleeve mechanism and the movable rod;
when the passage is in a closed state, the liquid cannot flow between the first chamber and the second chamber, and the liquid in the first chamber is incompressible, such that movement of the piston in the movable rod is restricted, thereby restricting the relative movement between the sleeve mechanism and the movable rod.

33. The shock absorber according to claim 32, **characterized in that** the locking mechanism further comprises:
a coil and an iron core, the iron core being used in cooperation with the coil so that the iron core can move relative to the coil, one of the coil and the iron core being connected to the valve core, for driving the valve core to block or open the passage.

34. The shock absorber according to claim 33, **characterized in that** the locking mechanism further comprises:
a drive rod, one of the coil and the iron core being connected to the valve core through the drive rod, the coil and the iron core being configured to drive the drive rod to block or open the passage.

35. The shock absorber according to claim 32, **characterized in that** an inner side of the movable rod is further provided with a floating member, the floating member being disposed in the second chamber to divide the second chamber into an air chamber in communication with the outside and a liquid chamber in communication with the first chamber, the liquid chamber and the first chamber being filled with the incompressible liquid;
the locking mechanism further comprises a push rod, one end of the push rod being fixed relative to the sleeve mechanism, the other end thereof being connected to the piston, for driving the piston to move in the inner cavity of the movable rod, at least a portion of the push rod being located outside the movable rod;
as the push rod drives the piston to move toward the first chamber, a volume of the push rod entering the inner cavity of the movable rod increases, and the liquid flows from the first chamber into the second chamber, thereby driving the floating member to move so that the liquid chamber increases.

36. The shock absorber according to claim 35, **characterized in that** the locking mechanism further comprises a second elastic element, the second elastic element being sleeved on the push rod, one end of the second elastic element abutting the piston, and the other end thereof abutting the valve core, for providing a driving force for the valve core to move away from the piston.

37. A material storage and retrieval device, **characterized in that** the device comprises:
a body, provided with a plurality of cargo compartments, each cargo compartment having a window for material entry or exit;
a shielding assembly, for shielding the windows, the shielding assembly being movably connected to the body and configured to open or close the window of a target cargo compartment, the target cargo compartment being a cargo compartment from which material is to be retrieved; and
a pick-and-place device, movably disposed in the body, the pick-and-place device having a first working mode and a second working mode;
in the first working mode, after the window of the target cargo compartment is unshielded, the pick-and-place device is used to automatically transfer the material into or out of the target cargo compartment via its window, the shielding assembly shielding other windows except for the target window;
in the second working mode, the pick-and-place device is configured to shield some of the cargo compartment windows, the shielding assembly is configured to shield other cargo compartment windows, and the window of the target cargo compartment is exposed between the pick-and-place device and the shielding assembly, so that the material in the target cargo compartment can be retrieved.

38. The material storage and retrieval device according to claim 37, **characterized in that** the pick-and-place device comprises a supporting mechanism and a lifting mechanism for driving the supporting mechanism to move to the window of any cargo compartment, the supporting mechanism being rotatable relative to the body to switch between a deployed state and a stowed state;
in the first working mode, the supporting mechanism is in the deployed state, for supporting the material and transferring the material;
in the second working mode, the supporting mechanism is in the stowed state, for cooperating with the shielding assembly to close the windows other than the window of the target cargo compartment.

39. The material storage and retrieval device according to claim 38, **characterized in that** the shielding assembly comprises a first curtain assembly and a second curtain assembly, the first curtain assembly and the second curtain assembly being arranged along a moving direction of the supporting mechanism;
in the first working mode, an open-and-close end is formed between the first curtain assembly and the second curtain assembly for opening to expose the window of the target cargo compartment or closing to shield the window of the target cargo compartment, the shielding assembly being configured to move relative to the body to adjust the position of the open-and-close end relative to the body; in response to the supporting mechanism moving to a corresponding target position, the open-and-close end moves to near the target position, unshielding the window of the target cargo compartment, the supporting mechanism being used to transfer the material into or out of the target cargo compartment.

40. The material storage and retrieval device according to claim 38, **characterized in that** the shielding assembly comprises a first curtain assembly and a second curtain assembly, the first curtain assembly and the second curtain assembly being arranged along the moving direction of the supporting mechanism;
in the second working mode, an open-and-close end is formed between the first curtain assembly and the pick-and-place device for opening to expose the window of the target cargo compartment or closing to shield the window of the target cargo compartment, the first curtain assembly shielding some the cargo compartment windows other than the window of the target cargo compartment, the pick-and-place device alone shielding the remaining windows other than the window of the target cargo compartment, or the pick-and-place device cooperating with the second curtain assembly connected to the pick-and-place device to close the remaining windows other than the window of the target cargo compartment.
